# EUROPÄISCHE PATENTSCHRIFT

(11) **EP 1 194 275 B1**
(45) Veröffentlichungstag und Bekanntmachung des Hinweises auf die Patenterteilung: **18.06.2003**
(21) Anmeldenummer: 00947987.4
(22) Anmeldetag: 13.07.2000
(51) Int. Cl.: B29C 44/42, B29C 45/54, B29C 45/53

(54) **SPRITZGIESSVORRICHTUNG**
INJECTION MOLDING DEVICE
DISPOSITIF DE MOULAGE PAR INJECTION

(30) Priorität: 14.07.1999 DE 19932954
(43) Veröffentlichungstag der Anmeldung: 10.04.2002
(73) Patentinhaber: Demag Ergotech GmbH, 90571 Schwaig (DE)
(72) Erfinder: HERRMANN, Torsten, D-81679 München (DE); HERRMANN, Jürgen, D-82166 Gräfelfing (DE); SCHÜRMANN, Erich, D-48324 Sendenhorst (DE); KLAWITER, Kurt, D-40545 Düsseldorf (DE)
(74) Vertreter: Grünecker, Kinkeldey, Stockmair & Schwanhäusser Anwaltssozietät
(86) Internationale Anmeldenummer: EP0006707
(87) Internationale Veröffentlichungsnummer: WO01003902

(56) Entgegenhaltungen:
- US-A- 3 819 313

## Beschreibung

Die Erfindung betrifft eine Spritzgießvorrichtung für aufschäumbare Werkstoffe mit einer Plastifiziereinrichtung, welche hintereinander eine Einzugszone zur Aufnahme eines zu plastifizierenden Werkstoffs, eine Umwandlungszone zur Plastifizierung und eine Ausstoßzone zur Abgabe des plastifizierten und verdichteten Werkstoffs aufweist, einer Zudosiereinrichtung zur dosierten Zufuhr eines Aufschäummittels zum plastifizierten und verdichteten Werkstoff, einer Mischeinrichtung zur homogenen Mischung von Aufschäummittel und plastifiziertem und verdichten Werkstoff, und einem Druckraum zur Lösung des zugemischten Aufschäummittels im Werkstoff, von welchem Druckraum der Werkstoff über eine Drosseleinrichtung einem Formwerkzeug zuführbar ist.

Eine solche Spirtzgießvorrichtung ist aus der Praxis bekannt Der Plastifiziereinrichtung wird in der Einzugszone insbesondere ein Polymer als plastifizierbarer Werkstoff in Form eines Granulats oder Pulvers über eine Trichter zugeführt. Anschließend an die Einzugszone wird der Werkstoff in der Umwandlungszone der Spritzgießvorrichtung plastifiziert und verdichtet und schließlich in der Ausstoßzone abgegeben. Bei konventionellen Spritzgießvorrichtungen kann die Ausgabe direkt über eine Drossel oder dergleichen an das Formwerkzeug erfolgen.

Wird allerdings als Werkstoff ein aufschäumbarer Werkstoff eingesetzt, muß dem plastifizierten und verdichteten Werkstoff mittels einer Zudosiereinrichtung Aufschäummittel zugesetzt werden. Die Menge des Aufschäummittels ist dabei so dosiert, daß nach Mischung von Aufschäummittel und Werkstoff in einer Mischeinrichtung in einem daran anschließenden Druckraum das Aufschäummittel im Werkstoff gelöst wird.

Anschließend wird zur Herstellung eines Endprodukt eine bestimmte Menge von Werkstoff mit gelöstem Aufschäummittel über eine Drosseleinrichtung dem Formwerkzeug zugeführt. In Drosseleinrichtung und Formwerkzeug findet eine Keimbildung innerhalb des Werkstoffs statt, wobei an diesen Keimbildungsstellungen eine Aggregation wenigstens einer Anzahl von Molekülen des Aufschäummittels stattfindet und sich entsprechend zum Druckabbau und vor Aushärtung des Werkstoffs aus dem Aufschäummittel Blasen bilden. Bei einem mikrozellulären Werkstoff haben diese Blasen oder Zellen einen Durchmesser von einigen Mikrometern bis 50 oder gar 100 Mikrometern. Bei submikrozellulären Blasen weisen diese noch kleinere Durchmesser auf. Diese Blasen sollen möglichst homogen mit nahezu gleichem Durchmesser im Werkstoff verteilt sein.

Bei der aus der Praxis bekannten Spritzgießvorrichtung erfolgt die Zudosierung des Aufschäummittels in der Plastifiziereinrichtung nach der Plastifizierung des Werkstoffes. Die Plastifiziereinrichtung kann zwischen Umwandlungszone und Ausstoßzone die Mischeinrichtung aufweisen, so daß ebenfalls die Mischung von Aufschäummittel und Werkstoff innerhalb der Plastifiziereinrichtung erfolgt. An die Ausstoßzone schließt sich bei der vorbekannten Spritzgießvorrichtung innerhalb der Plastifiziereinrichtung ein Druckraum an, in dem entsprechende Druck- und Temperaturverhältnisse zur Lösung des Aufschäummittels im Werkstoff herrschen.

Anschließend kann aus dem Druckraum der Werkstoff mit gelöstem Aufschäummittel über die Drosseleinrichtung dem Formwerkzeug zugeführt werden.

Der Erfindung liegt die Aufgabe zugrunde, eine Spritzgießvorrichtung der eingangs genannten Art dahingehend zu verbessern, daß in einfacher Weise der Druckraum variabel bestimmt und in diesen bzw. aus diesem Werkstoff ein- und ausführbar ist.

Diese Aufgabe wird im Zusammenhang mit den Merkmalen des Oberbegriffs des Patentanspruchs 1 dadurch gelöst, daß der Druckraum zwischen in einem Druckzylinder insbesondere unabhängig voneinander axial verschieblichen Kolben gebildet ist.

Eine einfach aufgebaute und alle Zonen aufweisende Plastifiziereinrichtung kann durch einen Extruder gebildet werden.

Um eine Plastifiziereinrichtung bzw. einen Extruder nachträglich entsprechend umrüsten zu können, können Zudosiereinrichtung und/oder Mischeinrichtung und/oder Druckraum ein an ein Abgabeende des Extruders anflanschbares Modul bilden. Dieses ist vorzugsweise kompatibel zu allen Plastifiziereinrichtungen bzw. Spritzgießmaschinen.

Um einen vom Extruder unabhängigen Mischvorgang zu ermöglichen, kann die Mischeinrichtung separat zur Pastifiziereinrichtung ausgebildet sein und eine im wesentlichen zylindrischen Mischraum drehbar gelagerte Mischschnecke aufweisen.

Um einen Druck im Druckraum unabhängig vom Druck in der Mischeinrichtung zu erhalten, kann der Mischraum mit dem Druckzylinder über eine von wenigstens einem Kolben verschließbare Zuführbohrung verbunden sein. Über diese Zuführbohrung wird die Mischung aus Werkstoff und Aufschäummittel dem Druckraum zugeführt und kann dort nach Verschließen der Zuführbohrung unter entsprechenden Druck vor Abgabe zum Formwerkzeug gesetzt werden.

Ein kompaktes Modul ergibt sich beispielsweise dann, wenn Mischschnecke und Druckzylinder im wesentlichen parallel zueinander angeordnete Längsachsen aufweisen.

Um insbesondere nach Verschließen der Zuführbohrung erst den Druckraum relativ zur Drosseleinrichtung bzw. zum Formwerkzeug zu öffnen, kann der Druckzylinder in Richtung seiner Längsachse versetzt zur Zuführbohrung mit der Drosseleinrichtung in Verbindung stehen.

Ein einfaches Ausführungsbeispiel für eine solche Drosseleinrichtung ist denkbar, bei dem die Drosseleinrichtung im wesentlichen durch eine ins Innere des Druckzylinders mündende Auslaßbohrung gebildet ist.

Um in einfacher Weise eine Anpassung an unterschiedlich große Formwerkzeuge und/oder an unterschiedliche im Druckraum erwünschte Drücke zu ermöglichen, kann das Volumen des Druckraums durch den einstellbaren Abstand der Kolben variierbar sein. Ein einfacher Takt bzw. Zyklus für die Kolben zur Herstellung einer Anzahl von geformten Werkstücken ist dadurch realisierbar, wenn die Kolben zwischen einer den Druckraum mit der Zuführbohrung verbindenden Einlaßstellung und einer dem Druckraum mit der Auslaßbohrung verbindenden Auslaßstellung verstellbar sind. In Einlaßstellung wird dem Druckraum Werkstoff mit Aufschäummittel in erwünschter Menge und unter erwünschtem Druck zugeführt. Durch Verstellen der Kolben wird der Druckraum verschoben, wobei je nach Wunsch der Druck im Druckraum erhöht, emiedrigt oder gleich gehalten werden kann. Nach entsprechendem Verschieben der beiden Kolben gerät der Druckraum mit der Auslaßbohrung in Verbindung und der Werkstoff mit gelöstem Aufschäummittel wird über die Drossel an das Formwerkzeug abgegeben.

Eine gezielte Druckentspannungsrate unter Verwendung nur der Auslaßbohrung als Drossel kann dadurch erhalten werden, wenn in Auslaßstellung die Auslaßbohrung durch einen als Drosselkolben arbeitenden Kolben zur Bestimmung der Druckentspannungsrate variabel abdeckbar ist.

Im Gegensatz zum vorbekannten Stand der Technik, wo die Einspritzgeschwindigkeit in das Formwerkzeug durch ein Verschieben der Extruderschnecke in Richtung Auslaßende des Extruders stattfindet, kann einem Ausführungsbeispiel der Erfindung in Auslaßstellung der Kolben ein Kolben als Druckkolben zur Bestimmung der Einspritzgeschwindigkeit in das Formwerkzeug an den Drosselkolben gesteuert angenähert werden.

Um auch ein Zweikomponentenspritzgießen zu ermöglichen, kann wenigstens ein Kolben eine Querbohrung zur Zufuhr von unbegastem, plastifiziertem Werkstoff zur Auslaßbohrung aufweisen.

Eine einfache Realisierung einer solchen Querbohrung ergibt sich, wenn die Querbohrung in einer Durchlaßstellung des Kolbens eine mit der Plastifiziereinrichtung verbundene Umgehungsbohrung und die Auslaßbohrung verbindet. Die Umgehungsbohrung ermöglicht ein direktes Transportieren von Werkstoff vom Plastifizierer zur Drosseleinrichtung, ohne daß der entsprechende Werkstoff Mischeinrichtung und Druckraum passiert. Um in diesem Zusammenhang eine Zufuhr von Werkstoff zur Druckkammer auch bei weiterlaufender Mischeinrichtung zu verhindern, kann in Durchlaßstellung die Zuführbohrung durch einen Kolben geschlossen sein.

Bei einem Ausführungsbeispiel gemäß der Erfindung besteht die Möglichkeit, eine bestimmte Menge unbegasten Werkstoffs aus der Plastifiziereinrichtung über die Querbohrung der Drosseleinrichtung zuzuführen, wobei die entsprechende Menge des Werkstoffs dadurch bestimmbar ist, daß im Extruder zwischen dem Abgabeende und einer Extruderschnecke ein Extrudervorraum ausgebildet ist. Bei axialer Verstellung der Extruderschnecke in Richtung Extrudervorraum wird der dort enthaltene Werkstoff über Umgehungs- und Querbohrung der Drosseleinrichtung zugeführt.

Zu einfachen Anschluß der Plastifiziereinrichtung bzw. des Extruders an Mischeinrichtung bzw. Umgehungsbohrung kann an den Extruder eine Abführbohrung anschließen, die sich in eine zur Mischeinrichtung verlaufende Mischerbohrung und die Umgehungsbohrung verzweigt.

Um in einfacher Weise Aufschäummittel dem Werkstoff vor dem Mischen in der Mischeinrichtung zuzuführen, kann durch die Zudosiereinrichtung Aufschäummittel in die Mischerbohrung zuführbar sein. Durch Zudosieren in der Mischerbohrung kann gleichzeitig eine Begasung in einem engen Querschnitt erfolgen.

Um ein erwünschte Menge des Aufschäummittels zum Erhalten eines mikrozellulären oder submikrozellulären Materials zu bestimmen, kann die Zudosierung des Aufschäummittels in Abhängigkeit von einer Vorschubgeschwindigkeit der Extruderschnekke geregelt bzw. gesteuert werden.

Günstigerweise kann ein erwünschter Diffusionsdruck im variablen Druckraum bei seiner Befüllung mit Werkstoff dadurch aufrechterhalten werden, daß wenigstens ein Kolben in Abhängigkeit von dem erwünschten Diffusionsdruck vom anderen Kolben bei Befüllung des Druckraums mit Werkstoff fortbewegt wird.

Erfindungsgemäß ist es außerdem möglich, den Diffusionsdruck im Werkstoff dadurch beizubehalten, daß beide Kolben synchron in Richtung Drosseleinrichtung nach Befüllen des Druckraums verschoben werden.

Zu einfachen Anpassung üblicher Plastifiziereinrichtungen bzw. Extruder an ein Spritzgießen von zumindest mikrozellulären Materialien kann erfindungsgemäß das Modul eine vorgefertigte Moduleinheit sein, bei der bereits alle Untereinheiten, wie Mischeinrichtung, Zudosiereinrichtung, Druckzylinder mit Kolben und Drosseleinrichtung vorher zusammengebaut werden.

An dieser Stelle sei noch angemerkt, daß das Aufschäummittel an sich in bekannter Weise ein chemisches oder physikalisches Aufschäummittel sein kann, wobei als physikalische Aufschäummittel CO₂ oder N₂ bevorzugt werden.

Im Folgenden wird ein vorteilhaftes Ausführungsbeispiel der Erfindung anhand der in der Zeichnung beigefügter Figur näher erläutert.

Es zeigt:

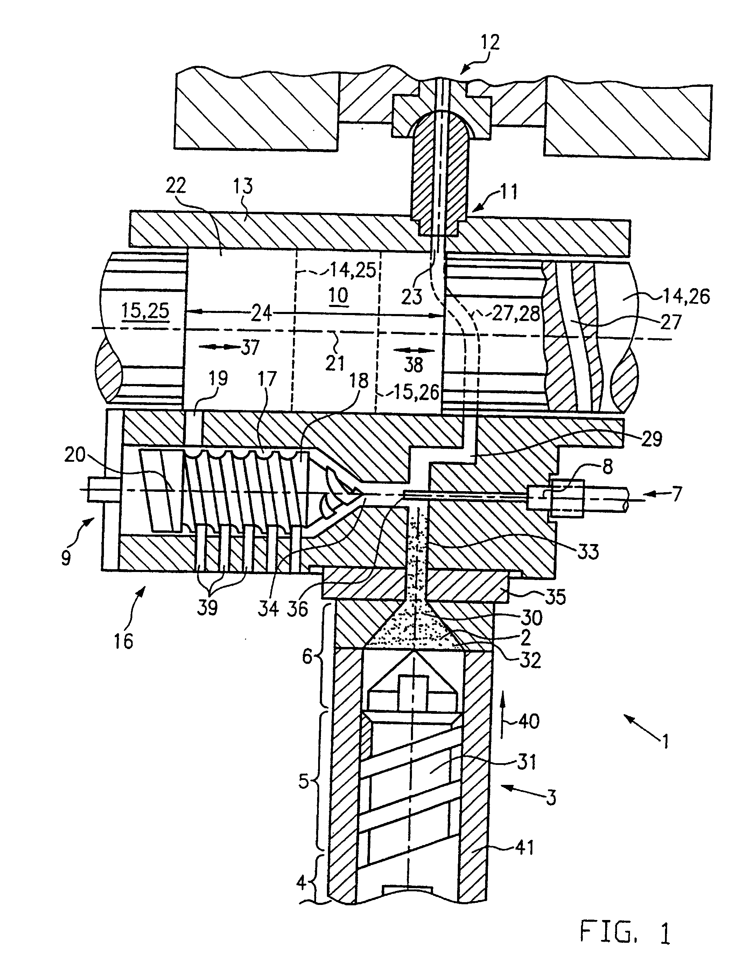

- Fig. 1: einen Schnitt durch eine erfindungsgemäße Spritzgießvorrichtung mit einem an einer Plastifiziereinrichtung angeflanschtem Modul.

Fig. 1 zeigt einen Schnitt durch ein Ausführungsbeispiel einer erfindungsgemäßen Spritzvorrichtung 1. Diese umfaßt eine Plastifiziereinrichtung 3 in Form eines Extruders mit Extruderzylinder 41 und darin drehbar gelagerter Extruderschnecke 31. Die Plastifiziereinrichtung 3 weist eine nur teilweise dargestellte Einzugszone 4 auf, in der mittels eines nichtdargestellten Trichters Werkstoff 2 in Form eines Granulats oder Pulvers zugeführt werden kann. An die Einzugszone 4 schließt sich eine Umwandlungszone 5 an, in der das zugeführte Material plastifiziert und verdichtet wird. An diese Umwandlungszone schließt sich die Ausstoßzone 6 an, in der über ein Abgabeende 30 der Plastifiziereinrichtung (Extruder) 3 das plastifizierte und verdichtete Material 2 an ein über einen Flansch 35 angeflanschtes Modul 16 abgebbar ist.

Das Modul 16 ist an jeden üblichen Extruder 3 anschließbar, so daß dieser in eine Spritzgießvorrichtung 1 zu Herstellung mikrozellulären Materials umwandelbar ist.

Das Modul 16 weist eine Zudosiereinrichtung 7 (nur teilweise dargestellt), eine Mischeinrichtung 9, einen Druckraum 10 und eine Drosseleinrichtung 11 auf. An letztere schließt ein übliches Formwerkzeug 12 zum Spritzgießen an.

Die Zudosiereinrichtung 7 dient zur dosierten Zufuhr eines insbesondere physikalischen Aufschäummittels, wie CO₂ oder N₂. Die Zudosierung erfolgt nach einer Verzweigung einer Abführbohrung 33 in Mischerbohrung 34 und Umgehungsbohrung 29. Die Abführbohrung 33 erstreckt sich vom Abgabeende 30 des Extruders 3 in das Modul 16 hinein, wobei nach Fig. 1 die Mischerbohrung 34 senkrecht nach links von der Abführbohrung 33 abzweigt. In dieser Mischerbohrung 34 mündet die Zudosiereinrichtung 7 mit einem Gasausgabeende 36.

Die Umgehungsbohrung 29 verläuft zuerst in Richtung der Abführbohrung 33 und dann parallel nach rechts versetzt zu dieser in Richtung Druckraum 10.

Die Mischerbohrung 34 öffnet sich zur Mischeinrichtung 9, die durch eine in einem Mischraum 17 drehbar gelagerte Mischschnecke 18 gebildet ist. Die entsprechende Lagerung und ein Antrieb für die Mischschnecke 18 sind zur Vereinfachung nicht dargestellt.

Zur Erhöhung der Mischwirkung der Mischeinrichtung 9 sind Stellstifte 39 feststellbar in Richtung senkrecht zur Längsachse 20 der Mischschnecke 18 im Modul 16 gelagert. Gegenüberliegend zu den Stellstiften 39 ist eine Zuführbohrung 19 im Modul 16 ausgebildet, die mit einem Ende im Mischraum 17 und mit dem anderen Ende im Druckraum 10 mündet.

Der Druckraum 10 ist im Innern 22 eines Druckzylinders 13 gebildet und seitlich durch Kolben 14, 15 begrenzt. Ein Volumen des Druckraums 10 läßt sich durch Variation eines Abstands 24 zwischen den Kolben 14, 15 verändern.

In Fig. 1 ist der Kolben 15 als Druckkolben in Einlaßstellung 25 angeordnet, in der die Zuführbohrung 19 in Richtung Druckraum 10 offen ist. Bei einer entsprechenden Anordnung des Kolbens 14 in einer Stellung 25 ist dieser mit seiner Endfläche entlang der gestrichelten Linie angeordnet.

Der Druckraum 10 bzw. Druckzylinder 13 ist mit Längsachse 21 parallel zur Längsachse 20 der Mischschnecke 18 angeordnet, wobei beide Kolben 14, 15 in Richtungen 37, 38 unabhängig voneinander bewegbar sind.

In Auslaßstellung 26 ist der Druckkolben 15 in der gestrichelt dargestellten Stellung 15, 26 und der Kolben 14 als Drosselkolben in der dargestellten Auslaßstellung 26 angeordnet, in der eine Auslaßbohrung 23 als Teil der Drosseleinrichtung 11 freigegeben ist. Die Auslaßbohrung 23 ist parallel versetzt in Richtung Längsachse 21 zur Zuführbohrung 19 und gegenüberliegend zu dieser angeordnet.

Der Drosselkolben 14 kann teilweise überdeckend zur Auslaßbohrung 23 angeordnet sein, wodurch eine Druckentspannungsrate innerhalb des Druckraums 10 bestimmt ist Bei Drosselkolben 14 in Auslaßstellung 26 kann der Druckkolben 15 aus der gestrichelt dargestellten Auslaßstellung 26 weiter in Richtung Drosselkolben bewegt werden, um den im Druckraum 10 enthaltenen Werkstoff mit darin gelöstem Aufschäummittel über die Auslaßbohrung 23 allmählich in Richtung Formwerkzeug 12 abzugeben.

Im Drosselkolben 14 ist eine Querbohrung 27 angeordnet, die in einer Durchlaßstellung 28, siehe die gestrichelte Darstellung der Querbohrung 27, die Auslaßbohrung 23 mit Umgehungsbohrung 29 verbindet. Bei Drosselkolben 14 in Durchlaßstellung 28 wird unbegaster Werkstoff 2 vom Extruder 3 über Umgehungsbohrung 29 und Querbohrung 27 der Auslaßbohrung 23 und damit der Drosseleinrichtung 11 und anschließend dem Formwerkzeug 12 zugeführt.

Im folgenden wird kurz die Funktionsweise der erfindungsgemäßen Spritzgießvorrichtung beschrieben.

Die Verfahrensschritte Gasdosierung, Verteilung/Mischung von Gas und Werkstoff oder Lösen des Gases im Werkstoff, Einspritzen und Entspannen werden in dem Modul 16 durchgeführt. Dieses kann an eine übliche Plastifiziereinrichtung (Extruder) 3 angeflanscht werden.

Die Extruderschnecke 31 fördert plastifizierten Werkstoff über ein System von Bohrun-. gen zur vorzugsweise angetriebenen Mischeinrichtung 9. Dort wird das mittels der Dosiereinrichtung 7 zudosierte Aufschäummittel eingemischt. Die Kolben 14, 15 befinden sich in Einlaßstellung 25, wobei die Zuführbohrung 19 im Inneren 22 des Druckraums 13 freigegeben ist.

Der begaste und gemischte Werkstoff tritt zwischen den beiden aufeinanderzugefahrenen Kolben 14, 15 in den Druckraum 10 ein, wobei entsprechend zum gewünschten Diffusionsdruck einer der beiden Kolben gebremst in Richtung Auslaßbohrung 23 zurückweicht. Das eingemischte Aufschäummittel wird im plastifizierten Werkstoff unter Druck gelöst.

Anschließend fahren beide Kolben unter Beibehaltung des gewünschten Diffusionsdrucks gemeinsam in Richtung Auslaßbohrung 23 und nach Erreichen der Auslaßbohrung beginnt die Entspannung des Werkstoffs in das Formwerkzeug 12, wobei die Schaumbildung einsetzt. Die relative Überdeckung von Drosselkolben 14 und Auslaßbohrung 23 bestimmt die Druckentspannungsrate und die Bewegung des Druckkolbens 15 bestimmt die Einspritzgeschwindigkeit und den Einspritzdruck des plastifizierten Werkstoffs. Der Drosselkolben 14 dient zusammen mit der Auslaßbohrung 23 als geregelte bzw. als gesteuerte Drosseleinrichtung 11. Der Druckkolben 15 dient als Einspritzzylinder für die Formwerkzeugfüllung 12 und erzeugt den entsprechenden Nachdruck.

Nach dem Nachdruckende fahren beide Kolben 14, 15 in Richtung Zuführbohrung 19 zurück und der Zyklus beginnt erneut.

Erfindungsgemäß erfolgt ein von der Extruderschnecke unabhängiger Mischvorgang von Werkstoff und Aufschäummittel. Weiterhin ist der Diffusionsdruck unabhängig vom Druck in der Mischeinrichtung und vom Druck in der Extruderschnecke, da dieser durch das Volumen des Druckraums 10 bestimmt ist. Es ist ein Zweikomponentenspritzgießen möglich, wobei beispielsweise zuerst ein unbegaster Werkstoff über Querbohrung 27 dem Formwerkzeug 12 und anschließend ein begaster Werkstoff über Mischeinrichtung 9, Druckraum 10 und Auslaßbohrung 23 dem Formwerkzeug 12 zugeführt wird. Die exakte Dosierung des Aufschäummittels durch Zudosiereinrichtung 7 erfolgt in Abhängigkeit von der Vorschubgeschwindigkeit 40 des Extruders 3, wobei die Begasung vorteilhaft in einem engen Querschnitt, d.h. in der Mischerbohrung 34 erfolgt.

Durch die Drosseleinrichtung 11 nach Erfindung ergibt sich eine gezielte Entspannungsrate ohne körperlich vorhandene Drossel, wobei die Zusammenwirkung von Drosselkolben 14 und Auslaßbohrung 23 den Drosseleffekt verursacht.

Weiterhin ergibt sich ein von der Extruderschnecke unabhängiger Mischvorgang durch die zusätzliche Mischeinrichtung 9, die gleichzeitig im Zusammenhang mit dem Druckraum gewährleistet, daß zuerst dem Druckraum 10 zugeführtes Material auch zuerst über Drosseleinrichtung 11 dem Formwerkzeug 12 zuführbar ist.

## Patentansprüche

1. Spritzgießvorrichtung (1) für aufschäumbare Werkstoffe (2) mit
- einer Plastifiziereinrichtung (3), welche hintereinander eine Einzugszone (4) zur Aufnahme zu plastifizierenden Werkstoffs (2), eine Umwandlungszone (5) zur Plastifizierung und eine Ausstoßzone (6) zur Abgabe des plastifizierten und verdichteten Werkstoffs aufweist;
- einer Zudosiereinrichtung (7) zur dosierten Zufuhr eines Aufschäummittels (8) zum plastifizierten und verdichteten Werkstoff (2);
- einer Mischeinrichtung (9) zur homogenen Mischung von Aufschäummittel (8) und plastifiziertem, verdichtetem Werkstoff (2), und
- einem Druckraum (10) zur Lösung des zugemischten Aufschäummittels (8) im Werkstoff (2), von welchem Druckraum der Werkstoff über eine Drosseleinrichtung (11) einem Formwerkzeug (12) zuführbar ist, **dadurch gekennzeichnet, daß** der Druckraum (10) zwischen zwei in einem Druckzylinder (13) insbesondere unabhängig voneinander axial verschieblichen Kolben (14, 15) gebildet ist.

2. Spritzgießvorrichtung nach Anspruch 1, **dadurch gekennzeichnet, daß** die Plastifiziereinrichtung (3) ein Extruder ist.

3. Spritzgießvorrichtung nach Anspruch 2, **dadurch gekennzeichnet, daß** Zudosiereinrichtungen (7) und/oder Mischeinrichtung (9) und/oder Druckraum (10) ein an ein Abgabeende (30) des Extruders (3) anflanschbares Modul (16) bilden.

4. Spritzgießvorrichtung nach wenigstens einem der vorangehenden Ansprüche,
**dadurch gekennzeichnet, daß** die Mischeinrichtung (9) eine in einem im wesentlichen zylindrischen Mischraum (17) gelagerte Mischschnecke (18) aufweist.

5. Spritzgießvorrichtung nach Anspruch 4,
**dadurch gekennzeichnet, daß** der Mischraum (17) mit dem Druckzylinder (13) über eine von wenigstens einem Kolben (14, 15) verschließbare Zuführbohrung (19) verbunden ist.

6. Spritzgießvorrichtung nach Anspruch 4 oder 5,
**dadurch gekennzeichnet, daß** Mischschnecke (18) und Druckzylinder (13) im wesentlichen parallel zueinander angeordnete Längsachsen (20, 21) aufweisen.

7. Spritzgießvorrichtung nach Anspruch 5 oder 6,
**dadurch gekennzeichnet, daß** der Druckzylinder (13) in Richtung seiner Längsachse (21) versetzt zur Zuführbohrung (19) mit der Drosseleinrichtung (11) verbunden ist.

8. Spritzgießvorrichtung nach wenigstens einem der vorangehenden Ansprüche,
**dadurch gekennzeichnet, daß** die Drosseleinrichtung (11) im wesentlichen durch eine im Inneren des Druckzylinders (13) mündende Auslaßbohrung (23) gebildet ist.

9. Spritzgießvorrichtung nach wenigstens einem der vorangehenden Ansprüche,
**dadurch gekennzeichnet, daß** das Volumen des Druckraums (10) durch einen einstellbaren Abstand (24) der Kolben (14, 15) variierbar ist.

10. Spritzgießvorrichtung nach wenigstens einem der vorangehenden Ansprüche,
**dadurch gekennzeichnet, daß** die Kolben (14, 15) zwischen einer den Druckraum (10) mit der Zuführbohrung (19) verbindenden Einlaßstellung (25) und einer den Druckraum (10) mit der Auslaßbohrung (23) verbindenden Auslaßstellung (26) verstellbar sind.

11. Spritzgießvorrichtung nach Anspruch 10
**dadurch gekennzeichnet, daß** in Auslaßstellung (26) die Auslaßbohrung (23) durch einen Kolben (14) als Drosselkolben zur Bestimmung einer Druckentspannungsrate variabel abdeckbar ist.

12. Spritzgießvorrichtung nach Anspruch 10 oder 11,
**dadurch gekennzeichnet, daß** in Auslaßstellung (26) ein Kolben (15) als Druckkolben zur Bestimmung einer Einspritzgeschwindigkeit in das Formwerkzeug (12) an den Drosselkolben (14) gesteuert annäherbar ist.

13. Spritzgießvorrichtung nach wenigstens einem der vorangehenden Ansprüche,
**dadurch gekennzeichnet, daß** wenigstens ein Kolben (14, 15) eine Querbohrung (27) zur Zufuhr von unbegastem, plastifiziertem Werkstoff (2) zur Auslaßbohrung (23) aufweist.

14. Spritzgießvorrichtung nach Anspruch 13,
**dadurch gekennzeichnet, daß** die Querbohrung (27) in einer Durchlaßstellung (28) des Kolbens (14, 15) eine mit der Plastifiziereinrichtung (3) verbundene Umgehungsbohrung (29) und die Auslaßbohrung (23) verbindet.

15. Spritzgießvorrichtung nach Anspruch 14,
**dadurch gekennzeichnet, daß** in Durchlaßstellung (28) die Zuführbohrung (19) verschlossen ist.

16. Spritzgießvorrichtung nach wenigstens einem der Ansprüche 2 bis 15,
**dadurch gekennzeichnet, daß** im Extruder (3) zwischen Abgabeende (30) und einer Extruderschnecke (31) ein Extrudervorraum (32) ausgebildet ist.

17. Spritzgießvorrichtung nach wenigstens einem der vorangehenden Ansprüche,
**dadurch gekennzeichnet, daß** an den Extruder (3) eine Abführbohrung (33) anschließt, die sich in eine zur Mischeinrichtung (9) verlaufende Mischerbohrung (34) und die Umgehungsbohrung (29) verzweigt.

18. Spritzgießvorrichtung nach Anspruch 17,
**dadurch gekennzeichnet, daß** Aufschäummittel (8) der Mischerbohrung (34) durch die Zudosiereinrichtung (7) zuführbar ist.

19. Spritzgießvorrichtung nach Anspruch 18,
**dadurch gekennzeichnet, daß** die Zudosierung des Aufschäummittels (8) in Abhängigkeit von einer Vorschubgeschwindigkeit der Extruderschnecke (31) regel- bzw. steuerbar ist.

20. Spritzgießvorrichtung nach wenigstens einem der vorangehenden Ansprüche,
**dadurch gekennzeichnet, daß** wenigstens ein Kolben (14, 15) in Abhängigkeit von einem gewünschten Diffusionsdruck vom anderen Kolben (15, 14) bei Befüllen des Druckraums (10) mit Werkstoff fortbewegbar ist.

21. Spritzgießvorrichtung nach wenigstens einem der vorangehenden Ansprüche,
**dadurch gekennzeichnet, daß** beide Kolben (14, 15) unter Beibehaltung des gewünschten Diffusionsdrucks synchron in Richtung Drosseleinrichtung (11) verschiebbar sind.

22. Spritzgießvorrichtung nach wenigstens einem der Ansprüche 3 bis 21,
**dadurch gekennzeichnet, daß** das Modul (16) eine vorgefertigte Moduleinheit ist.

## Claims

1. An injection moulding device (1) for foamable materials (2) comprising
- a plasticizing means (3) including, in succession, a feed section (4) for receiving therein the material (2) to be plasticized, a conversion zone (5) for plasticizing the material and an ejection zone (6) for discharging the plasticized and compacted material;
- an apportioning means (7) for apportioning a foaming agent (8) to the plasticized and compacted material (2);
- a mixer (9) for homogeneously mixing the foaming agent (8) and the plasticized and compacted material (2), and
- a pressure chamber (10) for dissolving the admixed foaming agent (8) in the material (2), the material being adapted to be supplied from said pressure chamber via a throttle means (11) to a die (12), **characterized in that** the pressure chamber (10) is formed between two plungers (14, 15) which are adapted to be axially displaced, especially independently of one another, in the interior of a pressure cylinder (13).

2. An injection moulding device according to claim 1, **characterized in that** the plasticizing means (3) is an extruder.

3. An injection moulding device according to claim 2, **characterized in that** theapportioning means (7) and/or the mixer (9) and/or the pressure chamber (10) define a module (16) which is adapted to be secured to a discharge end (30) of the extruder (3) via a flange.

4. An injection moulding device according to at least one of the preceding claims, **characterized in that** the mixer (9) includes a mixing screw (18) which is supported in a substantially cylindrical mixing chamber (17).

5. An injection moulding device according to claim **4, characterized in that** the mixing chamber (17) is connected to the pressure cylinder (13) via a supply bore (19) which is adapted to be closed by at least one plunger (14, 15).

6. An injection moulding device according to claim 4 or 5, **characterized in that** the longitudinal axes (20, 21) of the mixing screw (18) and of the pressure cylinder (13) extend substantially parallel to one another.

7. An injection moulding device according to claim 5 or 6, **characterized in that** the pressure cylinder (13) is connected to the throttle means (11) displaced relative to the supply bore (19) when seen in the direction of the longitudinal axis (21) of the pressure cylinder (13).

8. An injection moulding device according to at least one of the preceding claims, **characterized in that** the throttle means (11) is substantially formed by an outlet bore (23) which opens into the interior of the pressure cylinder (13).

9. An injection moulding device according to at least one of the preceding claims, **characterized in that** the volume of the pressure chamber (10) can be varied by an adjustable distance (24) between the plungers (14, 15).

10. An injection moulding device according to at least one of the preceding claims, **characterized in that** the plungers (14, 15) are adapted to be displaced between an admitting position (25) connecting the pressure chamber (10) to the supply bore (19) and a discharge position (26) connecting the pressure chamber (10) to the outlet bore (23).

11. An injection moulding device according to claim 10, **characterized in that**, at the discharge position (26), the outlet bore (23) can variably be closed by a plunger (14) acting as a throttle plunger for determining a pressure relief rate.

12. An injection moulding device according to claim 10 or 11, **characterized in that**, at the discharge position (26), a plunger (15) acting as a pressure plunger is movable towards the throttle plunger (14) in a controlled manner so as to determine the injection rate into the die (12).

13. An injection moulding device according to at least one of the preceding claims, **characterized in that** at least one plunger (14, 15) is provided with a transverse bore (27) for feeding ungassed, plasticized material (2) to the outlet bore (23).

14. An injection moulding device according to claim 13, **characterized in that,** at a through-position (28) of the plunger (14, 15), the transverse bore (27) connects a bypass bore (29) to the outlet bore (23), said bypass bore (29) communicating with the plasticizing means (3).

15. An injection moulding device according to claim 14, **characterized in that**, at the through-position (28), the supply bore (19) is closed.

16. An injection moulding device according to at least one of the claims 2 to 15, **characterized in that** an extruder antechamber (32) is formed in the extruder (3) between the discharge end (30) and an extruder screw (31).

17. An injection moulding device according to at least one of the preceding claims, **characterized in that** the extruder (3) is followed by a discharge bore (33) branching into a mixer bore (34), which extends towards the mixer (9), and the bypass bore (29).

18. An injection moulding device according to claim 17, **characterized in that** the foaming agent (8) is adapted to be fed to the mixer bore (34) by the apportioning means (7).

19. An injection moulding device according to claim 18, **characterized in that** the apportioning of the foaming agent (8) is controllable in dependence upon a feed rate of the extruder screw (31).

20. An injection moulding device according to at least one of the preceding claims, **characterized in that**, in dependence upon a desired diffusion pressure, at least one plunger (14, 15) can be moved away from the other plunger (15, 14) when the pressure chamber (10) is being filled with material.

21. An injection moulding device according to at least one of the preceding claims, **characterized in that** both plungers (14, 15) are displaceable synchronously in the direction of the throttle means (11) while maintaining the desired diffusion pressure.

22. An injection moulding device according to at least one of the claims 3 to 21, **characterized in that** the module (16) is a prefabricated module unit.

## Revendications

1. Dispositif de moulage par injection (1) pour des matières expansibles (2), comprenant
- un dispositif de plastification (3) qui comporte successivement une zone d'entrée (4) pour la réception de la matière (2) à plastifier, une zone de transformation (5) pour la plastification et une zone d'éjection (6) pour l'évacuation de la matière plastifiée et compactée ;
- un dispositif de dosage (7) pour l'amenée dosée d'un agent d'expansion (8) dans la matière (2) plastifiée et compactée ;
- un mélangeur (9) pour mélanger de manière homogène l'agent d'expansion (8) et la matière (2) plastifiée et compactée, et
- un espace de pression (10) pour la dissolution de l'agent d'expansion mélangé (8) dans la matière (2), à partir duquel la matière peut être amenée grâce à un dispositif d'étranglement (11) dans un outil de formage (12),
**caractérisé en ce que** l'espace de pression (10) est défini entre deux pistons (14, 15) mobiles axialement, notamment indépendamment l'un de l'autre, dans un cylindre de pression (13).

2. Dispositif de moulage par injection selon la revendication 1, **caractérisé en ce que** le dispositif de plastification (3) est une extrudeuse.

3. Dispositif de moulage par injection selon la revendication 2, **caractérisé en ce que** des dispositifs de dosage (7) et/ou un mélangeur (9) et/ou un espace de pression (10) forment un module (16) apte à être fixé par bride à une extrémité d'évacuation (30) de l'extrudeuse (3).

4. Dispositif de moulage par injection selon l'une au moins des revendications précédentes, **caractérisé en ce que** le mélangeur (9) comporte une vis mélangeuse (18) qui est montée dans un espace de mélange (17) sensiblement cylindrique.

5. Dispositif de moulage par injection selon la revendication 4, **caractérisé en ce que** l'espace de mélange (17) est relié au cylindre de pression (13) par l'intermédiaire d'un perçage d'amenée (19) qui est apte à être fermé par au moins un piston (14, 15).

6. Dispositif de moulage par injection selon la revendication 4 ou 5, **caractérisé en ce que** la vis mélangeuse (18) et le cylindre de pression (13) ont des axes longitudinaux (20, 21) sensiblement parallèles.

7. Dispositif de moulage par injection selon la revendication 5 ou 6, **caractérisé en ce que** le cylindre de pression (13) est relié au dispositif d'étranglement (11) d'une manière décalée par rapport au perçage d'amenée (19) dans le sens de son axe longitudinal (21).

8. Dispositif de moulage par injection selon l'une au moins des revendications précédentes, **caractérisé en ce que** le dispositif d'étranglement (11) est défini globalement par un perçage de sortie (23) qui débouche à l'intérieur du cylindre de pression (13).

9. Dispositif de moulage par injection selon l'une au moins des revendications précédentes, **caractérisé en ce que** le volume de l'espace de pression (10) est variable grâce à un écartement réglable (24) des pistons (14, 15).

10. Dispositif de moulage par injection selon l'une au moins des revendications précédentes, **caractérisé en ce que** les pistons (14, 15) sont mobiles entre une position d'admission (25) qui relie l'espace de pression (10) au perçage d'amenée (19), et une position de sortie (26) qui relie l'espace de pression (10) au perçage de sortie (23).

11. Dispositif de moulage par injection selon la revendication 10, **caractérisé en ce que** dans la position de sortie (26), le perçage de sortie (23) peut être couvert de manière variable par un piston (14) conçu comme un piston à piège, pour définir un rapport de détente.

12. Dispositif de moulage par injection selon la revendication 10 ou 11, **caractérisé en ce que** dans la position de sortie (26), un piston (15) conçu comme un piston de pression peut être rapproché de manière commandée du piston à piège (14) pour définir une vitesse d'injection dans l'outil de formage (12).

13. Dispositif de moulage par injection selon l'une au moins des revendications précédentes, **caractérisé en ce qu'**au moins un piston (14, 15) présente un perçage transversal (27) pour l'amenée de matière (2) plastifiée et non exposée au gaz jusqu'au perçage de sortie (23).

14. Dispositif de moulage par injection selon la revendication 13, **caractérisé en ce que** le perçage transversal (27), dans une position de passage (28) du piston (14, 15), relie un perçage de dérivation (29) relié au dispositif de plastification (3), et le perçage de sortie (23).

15. Dispositif de moulage par injection selon la revendication 14, **caractérisé en ce que** dans la position de passage (28), le perçage d'amenée (19) est fermé.

16. Dispositif de moulage par injection selon l'une au moins des revendications 2 à 15, **caractérisé en ce que** dans l'extrudeuse (3), un vestibule d'extrudeuse (32) est défini entre l'extrémité d'évacuation (30) et une vis d'extrudeuse (31).

17. Dispositif de moulage par injection selon l'une au moins des revendications précédentes, **caractérisé en ce qu'**il est prévu, dans le prolongement de l'extrudeuse (3), un perçage de sortie (33) qui se ramifie pour former un perçage de mélangeur (34) allant vers le mélangeur (9), et le perçage de dérivation (29).

18. Dispositif de moulage par injection selon la revendication 17, **caractérisé en ce que** l'agent d'expansion (8) est apte à être amené dans le perçage de mélangeur (34) grâce au dispositif de dosage (7).

19. Dispositif de moulage par injection selon la revendication 18, **caractérisé en ce que** le dosage de l'agent d'expansion (8) est apte à être réglé ou commandé en fonction d'une vitesse d'avance de la vis d'extrudeuse (31).

20. Dispositif de moulage par injection selon l'une au moins des revendications précédentes, **caractérisé en ce qu'**au moins un piston (14, 15) est apte à être déplacé par l'autre piston (15, 14), en fonction d'une pression de diffusion souhaitée, lors du remplissage de l'espace de pression (10) avec la matière.

21. Dispositif de moulage par injection selon l'une au moins des revendications précédentes, **caractérisé en ce que** les deux pistons (14, 15) sont mobiles de manière synchrone en direction du dispositif d'étranglement (11) en maintenant la pression de diffusion souhaitée.

22. Dispositif de moulage par injection selon l'une au moins des revendications 3 à 21, **caractérisé en ce que** le module (16) est une unité de module préfabriquée.
